# EUROPÄISCHE PATENTANMELDUNG

(11) **EP 2 025 438 A2**
(43) Veröffentlichungstag der Anmeldung: **18.02.2009**
(21) Anmeldenummer: 08014332.4
(22) Anmeldetag: 12.08.2008
(51) Int. Cl.: B23B 49/02

(54) **Zentriervorrichtung zum Ausrichten von Werkzeugen für die Bearbeitung von Bohrungen an Zylinderköpfen**

(30) Priorität: 17.08.2007 DE 202007011551 U
(71) Anmelder: Klann Spezial-Werkzeugbau GmbH, 78166 Donaueschingen (DE)
(72) Erfinder: Baur, Stefan, 78166 Donaueschingen-Pfohren (DE); Sjösten, Thomas, 78166 Donaueschingen (DE)
(74) Vertreter: Neymeyer, Franz

(57) **Zusammenfassung**

Die Erfindung betrifft eine Vorrichtung (1) mit einer Zentrierbuchse (2), welche zum zentrierten Ausrichten von Werkzeugen für die Bearbeitung von Bohrungen (41) an Zylinderköpfen (40) mit einer Durchgangsbohrung (11) versehen ist, über welche die Zentrierbuchse (2) koaxial zur zu bearbeitenden Bohrung (41) ausrichtbar ist. Um eine Zentrierbuchse einer Vorrichtung (1) zentriert zur Bohrung (41) an einem Zylinderkopf ansetzen zu könne ist erfindungsgemäß vorgesehen, dass die Zentrierbuchse (2) ein Zentrierelement (4, 5) aufweist, mit welchem die Zentrierbuchse (2) mit einem im Umgebungsbereich der zu bearbeitenden Bohrung (41) angeordneten Zentrieransatz (44) in Eingriff bringbar ist und, dass mit der Zentrierbuchse (2) in Wirkverbindung bringbare Spannmittel (12, 13, 14, 15) vorgesehen sind, durch welche die Zentrierbuchse (2) axial gegen den Zentrieransatz (44) der zu bearbeitenden Bohrung (41) verspannbar ist.

## Beschreibung

Die Erfindung betrifft eine Vorrichtung mit einer Zentrierbuchse, welche zum zentrierten Ausrichten von Werkzeugen für die Bearbeitung von Bohrungen an Zylinderköpfen mit einer Durchgangsbohrung versehen ist, über welche die Zentrierbuchse koaxial zur zu bearbeitenden Bohrung ausrichtbar ist.

Aus dem Stand der Technik ist es bekannt, dass Zylinderköpfe von Kraftfahrzeugmotoren, insbesondere von Dieselmotoren mehrere Bohrungen aufweisen, welche zur Aufnahme von unterschiedlichen oder gleichen Bauteilen, wie beispielsweise Einspritzdüsen oder auch Glühkerzen dienen. Insbesondere die zur Aufnahme von Glühkerzen vorgesehenen Bohrungen weisen in ihrem äußeren Endbereich ein Innengewinde auf, in welche die entsprechend einzusetzende Glühkerze mit einem Montagegewinde festsitzend einschraubbar ist. Zum Brennraum hin ist eine solche Bohrung in der Regel mehrfach abgestuft und nimmt ein Schaftteil sowie das Heizelement der Glühkerze auf. Dabei durchragen diese Glühkerzen den Zylinderkopf in den jeweils zugehörigen Brennraum, so dass dieser durch die Glühkerze im Bedarfsfall vor dem Start des Dieselmotors vorgeheizt werden kann. Im Bereich des brennraumseitigen Endes weisen solche Glühkerzen, wie oben bereits erwähnt, ein Heizelement auf, welches zumindest minimal in den Brennraum des jeweiligen Zylinders des Dieselmotors hineinragt. Dieses Heizelement wird von einem Montagerohr aufgenommen, welches in ihrem, dem Heizelement gegenüberliegenden Endbereich mit dem vorerwähnten Montagegewinde versehen ist. Dabei sind die Bohrungen zur Aufnahme einer solchen Einspritzdüse zum Brennraum hin mit einem radial verjüngten Abschnitt versehen, durch welchen ein Dichtsitz gebildet wird. Das Montagerohr der Glühkerze ist dieser abgesetzten Ausbildung der Bohrung angepasst und weist in entsprechend axialer Anordnung eine umlaufende Dichtfläche auf, mit welcher das Montagerohr beim Einschrauben dicht auf den Dichtsitz der Bohrung des Zylinderkopfes zur Anlage kommt.

Nach längerer Betriebsdauer eines solchen Dieselmotors ist es häufig notwendig, defekte Glühkerzen auszutauschen. Dabei ist häufig zu beobachten, dass das Montagerohr mit seinem Montagegewinde im Innengewinde der Aufnahmebohrung äußerst fest sitzt. Dies hat zur Folge, dass beim Versuch, über den Außensechskant der Glühkerze diese aus der Aufnahmebohrung herauszudrehen, dieser Außensechskant abgeschert wird und somit das Montagerohr mit seinem Montagegewinde im Innengewinde verbleibt.

Es ist folglich für die Erneuerung der Glühkerze notwendig, diesen Rest der "alten" Glühkerze aus der Bohrung des Zylinderkopfes zu entfernen. In der Regel werden hierzu verschiedene Werkzeuge nacheinander verwendet, um das Montagerohr mit seinem Montagegewinde sowie auch den restlichen Rohrabschnitt der Glühkerze aus der Bohrung des Zylinderkopfes entfernen zu können. Hierzu wird beispielhaft auf die DE 20 2005 008 241.4 verwiesen, in welcher die einzelnen Arbeitsschritte zum Entfernen der Glühkerzenreste kurz beschrieben sind.

Nachdem nun die Glühkerze vollständig aus der Bohrung des Zylinderkopfes entfernt wurde, kann es notwendig sein, das Innengewinde der Bohrung des Zylinderkopfes mittels eines entsprechenden Gewindebohrers nachzuarbeiten, um eine neue Glühkerze wieder korrekt einsetzen zu können.

Weiter kann es zum Austauschen einer Glühkerze auch notwendig sein, dass die Bohrung des Zylinderkopfes in ihrem abgestuften zylindrischen Aufnahmebereich für den rohrförmigen Teil des Montagerohres der Glühkerze vor dem Einsetzen einer neuen Glühkerze mittels einer Reibahle oder einem sonstigen geeigneten Werkzeug nachbearbeitet werden muss. Diese Nachbearbeitung dient in der Regel zum Entfernen von Verbrennungsrückständen oder sonstigen Verunreinigungen, wie beispielsweise Oxidationsprodukten, so dass die Aufnahmebohrung nach diesem Arbeitsschritt zumindest annähernd wieder ihren ursprünglichen "Neuzustand" einnimmt.

Dabei ist es sowohl beim Ausbohren des Montagegewindes des Montagerohres als auch beim Nachschneiden des Innengewindes des Zylinderkopfes notwendig, das entsprechende Werkzeug mit möglichst hoher Präzision zur Längsmittelachse der Bohrung des Zylinderkopfes auszurichten. Diese Ausrichtung ist erforderlich, um ein nachfolgend einwandfreies Einschrauben einer neuen Glühkerze mittig zur Bohrung im Zylinderkopf sicherstellen zu können.

Aus der vorgenannten DE 20 2005 008 241.4 ist ein Werkzeugsystem bekannt geworden, mittels welchem diese Bearbeitungswerkzeuge für die Bearbeitung einer Bohrung eines Zylinderkopfes in entsprechender Weise ausgerichtet werden können. Bei diesem bekannten Werkzeugsystem ist allerdings Voraussetzung, dass die zu bearbeitende Bohrung des Zylinderkopfes nach außen hin eine radial erweiterte, leicht kegelförmige oder zylindrische Vertiefung aufweist. D.h., dass die eigentliche zu bearbeitende Bohrung des Zylinderkopfes versenkt in dieser radial erweiterten Vertiefung angeordnet ist. Durch diese spezielle Ausgestaltung eines Zylinderkopfes ist es möglich, in diese Vertiefung eine Klemmhülse einzusetzen. In diese unverspannt in die Vertiefung eingesetzte Klemmhülse wird gemäß dieses bekannten Standes der Technik anschließend eine als Zentrierhülse bezeichnete Zentrierbuchse eingeschoben, bis diese außenseitig an der zu bearbeitenden Bohrung des Zylinderkopfes ansteht. Um nun diese Zentrierbuchse zur Bohrung des Zylinderkopfes auszurichten, wird die Klemmhülse beispielsweise mittels eines speziell ausgestalteten Schlagwerkzeuges in die Vertiefung des Zylinderkopfes eingepresst. Bei diesem Einpressvorgang verringert sich der Durchmesser der Klemmhülse, wobei die Klemmhülse sich gleichzeitig koaxial zur Vertiefung und damit zur Bohrung des Zylinderkopfes ausrichtet. Durch diesen Ausrichtvorgang und durch den Klemmvorgang wird auch die Zentrierbuchse zwangsläufig relativ zur Bohrung des Zylinderkopfes ausgerichtet.

Dieses Werkzeugsystem ist allerdings bei Zylinderköpfen, deren Bohrungen zur Aufnahme beispielsweise einer solchen Glühkerze nicht in einer derartige Vertiefung angeordnet sind, nicht einsetzbar. Vielmehr ist bei solchen Zylinderköpfen lediglich im Umgebungsbereich der Bohrung des Zylinderkopfes eine Art Zentrieransatz, d.h., letztendlich eine radial erweiterte, leicht vertiefte, konzentrisch zur Bohrung angeordnete, umlaufende Ausfräsung vorhanden. Deren Dimensionierung erlaubt es nicht, eine Klemmhülse einpressen zu können.

Anstatt einer solchen als Zentrieransatz nutzbaren Einsenkung sind auch Zylinderköpfe bekannt, welche in diesem Umgebungsbereich einen radial erweiterten, axial vorstehenden domartig ausgebildeten Zentrieransatz aufweisen.

Ausgehend von solchen Ausgestaltungen von Zylinderköpfen liegt der Erfindung die Aufgabe zugrunde, eine Vorrichtung mit einer Zentrierbuchse anzugeben, die zum Ausrichten der entsprechenden Bearbeitungswerkzeuge zentriert zur Bohrung am Zylinderkopf ansetzbar ist.

Die Aufgabe wird erfindungsgemäß zusammen mit den Merkmalen der Oberbegriffes des Anspruches 1 dadurch gelöst, dass die Zentrierbuchse ein Zentrierelement aufweist, mit welchem die Zentrierbuchse mit einem im Umgebungsbereich der Bohrung angeordneten Zentrieransatz in Eingriff bringbar ist und, dass mit der Zentrierbuchse in Wirkverbindung bringbare Spannmittel vorgesehen sind, durch welche die Zentrierbuchse axial gegen den Zentrieransatz der Bohrung verspannbar ist.

Durch die erfindungsgemäße Ausgestaltung der Vorrichtung ist die Zentrierbuchse mit ihrer die verschiedenen Werkzeuge aufnehmenden Durchgangsbohrung zu einem konzentrisch zur zu bearbeitenden Bohrung des Zylinderkopfes wie auch koaxial zur Längsmittelachse dieser Bohrung des Zylinderkopfes ausrichtbar und feststehend am Zylinderkopf fixierbar. Dazu weist die Zentrierbuchse ein Zentrierelement auf, mit welchem die Zentrierbuchse mit einem im Umgebungsbereich der Bohrung angeordneten Zentrieransatz in Eingriff bringbar ist. Dieser Zentrieransatz kann, wie oben bereits beschrieben, als umlaufende kreisringförmige Einsenkung im Umgebungsbereich der zu bearbeitenden Bohrung ausgebildet sein. Für diesen Fall ist die Formgebung des Zentrierelementes der Zentrierbuchse derart dieser Einsenkung angepasst, dass beim Anpressen der Zentrierbuchse gegen den Zylinderkopf eine automatische Zentrierung sowie eine automatische Ausrichtung koaxial zur Bohrung des Zylinderkopfes erfolgt. Dazu sind erfindungsgemäß Spannmittel vorgesehen, welche in entsprechender Weise mit der Zentrierbuchse in Wirkverbindung bringbar sind.

D.h., dass diese Spannmittel eine Spannkraft in axialer Richtung auf die Zentrierbuchse aufbringen, so dass diese gegen den Zentrieransatz gepresst wird. Durch diese Pressung erfolgt somit die gewünschte koaxiale und konzentrische Ausrichtung der Zentrierbuchse zur Bohrung des Zylinderkopfes. Ist die Zentrierbuchse derart am Zylinderkopf im Bereich der Bohrung festgelegt, können anschließend die benötigten Werkzeuge koaxial in der Durchgangsbohrung der Zentrierbuchse geführt zur Bearbeitung dieser Bohrung eingesetzt werden. Als Werkzeuge können hier, wie bereits zum Stand der Technik beschrieben, Kernlochbohrer, Gewindebohrer oder Reibahlen oder auch sonstige für die Nachbearbeitung notwendigen Werkzeuge eingesetzt werden.

Die erfindungsgemäße Vorrichtung ist auch für Bohrungen einsetzbar, bei welchen in deren Umgebungsbereich ein domartiger, axial nach außen etwa ringförmig ausgebildeter Zentrieransatz am Zylinderkopf vorgesehen ist. In diesen Fällen ist im dem Zylinderkopf zugewandten Endbereich der Durchgangsbohrung der Zentrierbuchse ein mit einer entsprechend zentrierenden Formgebung versehenes Zentrierelement an der Zentrierbuchse vorzusehen. Eine derart ausgebildete Zentrierbuchse wird ebenfalls beim Verspannen gegen den Zylinderkopf konzentrisch zur Bohrung und koaxial zu deren Längsmittelachse ausgerichtet.

Auch ist die erfindungsgemäße Vorrichtung für Ausgestaltungen eines Zylinderkopfes einsetzbar, bei welchem, wie bereits zum Stand der Technik beschrieben, die Bohrung des Zylinderkopfes versenkt in einer konzentrisch zu dieser Bohrung verlaufenden Einsenkung angeordnet ist. Durch eine entsprechende Anpassung der Außenformgebung an die Einsenkung, insbesondere an eine dort ebenfalls vorgesehene, im Umgebungsbereich der Bohrung angeordnete Stirnringfläche, kann auch hier durch die axiale Verspannung der Zentrierbuchse deren gewünschte Ausrichtung zur Bohrung des Zylinderkopfes erreicht werden.

Weitere vorteilhafte Ausgestaltungen der Erfindung sind den weiteren Unteransprüchen entnehmbar.

Nachfolgend wird anhand der Zeichnung die Erfindung beispielhaft näher erläutert. Dabei sind in der Zeichnung einige prinzipielle Ausgestaltungen des Erfindungsgegenstandes beispielhaft dargestellt, und sollen lediglich deren Funktionsweise näher erläutern. Die Erfindung bezieht sich selbstverständlich auch auf andersartig ausgestaltete Ausführungsformen, deren Wirkung gleichfalls darauf abzielt, durch eine Axialverspannung einer Zentrierbuchse gegen den Zylinderkopf die gewünschte koaxiale und konzentrische Ausrichtung dieser Zentrierbuchse auf die zu bearbeitende Bohrung des Zylinderkopfes zu bewirken. Es zeigt:
- Fig. 1: eine perspektivische Explosionsdarstellung der einzelnen Bauelemente einer ersten Ausführungsform des Erfindungsgegenstandes;
- Fig. 2: die Vorrichtung aus Fig. 1 in ihrem an einer ersten Ausführungsform eines Zylinderkopfes montierten Zustand im Vertikalschnitt;
- Fig. 3: eine zweite Ausführungsvariante des Erfindungsgegenstandes, bei welcher die Vorrichtungsbestandteile aus den Fig. 1 und 2 zusammen mit einem zusätzlichen Adapterelement zum Ansetzen an einer zweiten Ausführungsform eines Zylinderkopfes anderer Formgebung und Ausgestaltung verwendet wird im Vertikalschnitt;
- Fig. 4: eine beispielhafte perspektivische Darstellung eines Zylinderkopfes mit zu bearbeitenden Bohrungen;
- Fig. 5: ein weiteres Ausführungsbeispiel eines Adapterelementes, welches speziell für den Einsatz an einem Zylinderkopf gemäß der Darstellung nach Fig. 4 vorgesehen ist;
- Fig. 6: eine perspektivische Darstellung des Adapterelementes aus Fig. 5 zusammen mit einer Zentrierbuchse, einem Stützelement sowie der Gewindestange aus den Fig. 1 und 2 in ihrem am Zylinderkopf aus Fig. 4 angesetzten Zustand in einer Teilansicht des Zylinderkopfes aus Fig. 4.

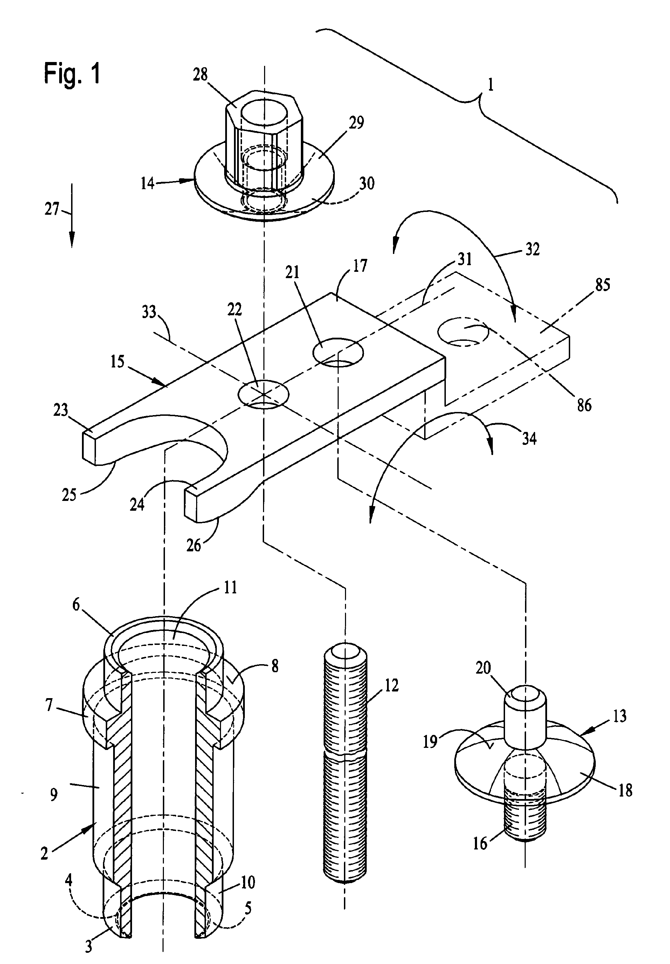

Fig. 1 zeigt eine perspektivische Explosionsdarstellung eines ersten Ausführungsbeispiels einer erfindungsgemäßen Vorrichtung 1. Bei dem dargestellten Ausführungsbeispiel weist diese Vorrichtung 1 als zentrales Element eine Zentrierbuchse 2 auf, welche mit einem Zentrieransatz einer Bohrung eines Zylinderkopfes koaxial und konzentrisch verlaufend in Eingriff bringbar ist. Diese Zentrierbuchse 2 bildet zu diesem Zweck unterseitig ein Zentrierelement 3, das beim vorliegenden Ausführungsbeispiel eine schmale innere Stirnringfläche 4 aufweist. Radial nach außen schließt sich an diese Stirnringfläche 4 eine von innen nach außen schräg nach oben geneigte Zentrierfläche 5 an.

In ihrem dieser Stirnringfläche 4 bzw. der Zentrierfläche 5 gegenüberliegenden Endbereich bildet die Zentrierbuchse 2 beim vorliegenden Ausführungsbeispiel einen radial verjüngt ausgebildeten Führungszylinder 6, welcher nach unten hin durch einen umlaufenden radial erweiterten Stützsteg 7 begrenzt ist. Dieser Stützsteg 7 bildet nach oben hin eine Stützfläche 8, deren Funktion später noch näher erläutert wird.

Unterhalb des Stützsteges 7 setzt sich die Zentrierbuchse 2 mit einem Führungszylinder 9 fort, an welchen sich zur Zentrierfläche 5 hin ein radial verjüngt ausgebildeter Stützzylinder 10 anschließt an dessen unterem Ende das Zentrierelement 3 angeformt ist.

Des Weiteren weist die Zentrierbuchse 2 eine zentrale Durchgangsbohrung 11 auf, welche zur axial verschiebbaren und drehbaren Aufnahme von entsprechend für die Bearbeitung von Bohrungen eines Zylinderkopfes vorgesehenen Werkzeugen dient. Solche Werkzeuge sind beispielhaft der DE 20 2005 008 241.4 entnehmbar, so dass zu deren genauen Ausgestaltung auf diese Druckschrift aus dem Stand der Technik Bezug genommen wird.

Des Weiteren sind, wie dies aus Fig. 1 ersichtlich ist, dieser Zentrierbuchse 2 Spannmittel zugeordnet, die beim vorliegenden Ausführungsbeispiel aus einer Gewindestange 12, einem Stützelement 13, einer Spannmutter 14 sowie einem Spannhebel 15 bestehen.

Die Gewindestange 12 kann beim vorliegenden Ausführungsbeispiel dazu vorgesehen sein, in eine entsprechende Gewindebohrung eines Zylinderkopfes eingeschraubt zu werden. Die Spannmutter 14 ist nach dem Aufsetzen des Spannhebels 15 auf diese Gewindestange 12 zum axialen Verspannen der Zentrierbuchse 2 gegen den Zylinderkopf oder als mittiges Widerlager vorgesehen.

Das Stützelement 13 weist nach unten hin ebenfalls einen Gewindezapfen 16 auf, welcher ebenfalls dazu vorgesehen sein kann, in eine zweite Gewindebohrung des Zylinderkopfes eingeschraubt zu werden. Durch dieses Stützelement 13 wird der Spannhebel 15 in seinem hinteren Endbereich 17 axial abgestützt. Auch kann dieses Stützelement 13 als Spannelement vorgesehen sein, so dass in diesem Fall die Gewindestange 12 mit ihrer Spannmutter als Widerlager oder Schwenklager für den Spannhebel 15 dient.

Des Weiteren ist aus Fig. 1 ersichtlich, dass das Stützelement 13 im oberen Endbereich seines Gewindezapfens 16 einen radial erweiterten Stützring 18 aufweist, dessen Oberfläche 19 konvex nach oben gewölbt, etwa kalottenförmig ausgebildet ist. Des Weiteren ist mittig in dieser Oberfläche 19 beim vorliegenden Ausführungsbeispiel ein Führungszapfen 20 vorgesehen, welcher zur losen Aufnahme des Spannhebels 15 dient. Soll das Stützelement 13 als axial verstellbares Spannelement eingesetzt werden, so kann dieses zum drehenden Antrieb im Bereich des Führungszapfens 20 mit Schlüsselflächen beispielsweise in form eines Außensechskantes oder eine Innensechskantes versehen sein (in der Zeichnung nicht dargestellt).

Um den Spannhebel 15 mit diesem Führungszapfen 20 sowie mit der Oberfläche 19 des Stützelementes 13 in Eingriff zu bringen, weist der Spannhebel 15 eine entsprechende Durchgangsbohrung 21 auf. Dieser Durchgangsbohrung 21 benachbart ist etwa mittig im Spannhebel 15 eine zweite Durchgangsbohrung 22 vorgesehen, mit welcher der Spannhebel 15 auf die Gewindestange 12 lose aufsetzbar ist. Diese beiden Durchgangsbohrungen 21 und 22 können auch als Langloch ausgebildet sein, so dass die Position des Spannhebels 15 im Einsatz an die Lage der im Zylinderkopf eingeschraubten Gewindestange 12 und des Stützelements 13 in gewissen Grenzen anpassbar ist.

Des Weiteren ist aus Fig. 1 ersichtlich, dass der Spannhebel 15 in seinem dem hinteren Endbereich 17 gegenüberliegenden Endbereich gabelförmig ausgebildet ist und zwei Gabelschenkel 23 und 24 bildet. Diese beiden Gabelschenkel 23 und 24 sind unterseitig jeweils mit einer bogenförmig verlaufenden Spannfläche 25 bzw. 26 versehen. Über diese Spannflächen 25 und 26 ist der Spannhebel 15 zur Fixierung der Zentrierbuchse 2 an einer zu bearbeitenden Bohrung eines Zylinderkopfes gegen die umlaufende Stützfläche 8 der Zentrierbuchse 2 verspannbar. Durch den Bogenförmigen Verlauf der Spannflächen 25 und 26 wird dabei eine Ausrichtung der Zentrierbuchse 2 nicht behindert.

Anstatt dieser gabelförmigen Ausbildung des Spannhebels 15 mit seinen Gabelschenkels 23 und 24 ist auch eine Ausgestaltung mit einem Langloch (in der Zeichnung nicht explizit dargestellt) vorstellbar, dessen Seitenstege mit den bogenförmig verlaufenden Spannflächen 25 und 26 versehen sein können.

Zum Aufbringen der Spannkräfte wird der Spannhebel 15 bei der dargestellten Ausführungsvariante durch die Spannmutter 14 in axialer Richtung des Pfeiles 27 gegen die Stützfläche 8 der Zentrierbuchse 2 gepresst, wobei das Stützelement 13 im hinteren Endbereich 17 bzw. im Bereich der Durchgangsbohrung 21 als Widerlager dient.

Wie aus Fig. 1 ersichtlich ist, bildet auch die Spannmutter 14 im unteren Endbereich ihres Antriebssechskantes 28 einen radial erweiterten Stützring 29. Die untere Oberfläche 30 dieses Stützringes 29 ist ebenfalls konvex gewölbt, kalottenartig ausgebildet.

Aufgrund der kalottenförmigen Ausgestaltung der beiden Oberflächen 19 und 30 des Stützelementes 13 einerseits und der Spannmutter 14 andererseits wird eine Schwenkbarkeit des Spannhebels 15 sowohl um dessen Längsachse 31 in Richtung des Doppelpfeiles 32 als auch um dessen Querachse 33 in Richtung des Pfeiles 34 ermöglicht. Dadurch wird erreicht, dass der Spannhebel 15 der Ausrichtbewegung der Zentrierbuchse 2 beim "Anpressen" sicher folgen kann.

Des Weiteren ist im Einsatz zwischen der Gewindestange 12 und der Durchgangsbohrung 22 sowie dem Führungszapfen 20 und der Durchgangsbohrung 21 ein gewisses Spiel vorgesehen, so dass sich die Lage des Spannhebels 15 beim Verspannen der Zentrierbuchse 2 gegen einen Zylinderkopf automatisch der sich einstellenden Sollposition der Zentrierbuchse 2 am Zylinderkopf anpassen kann.

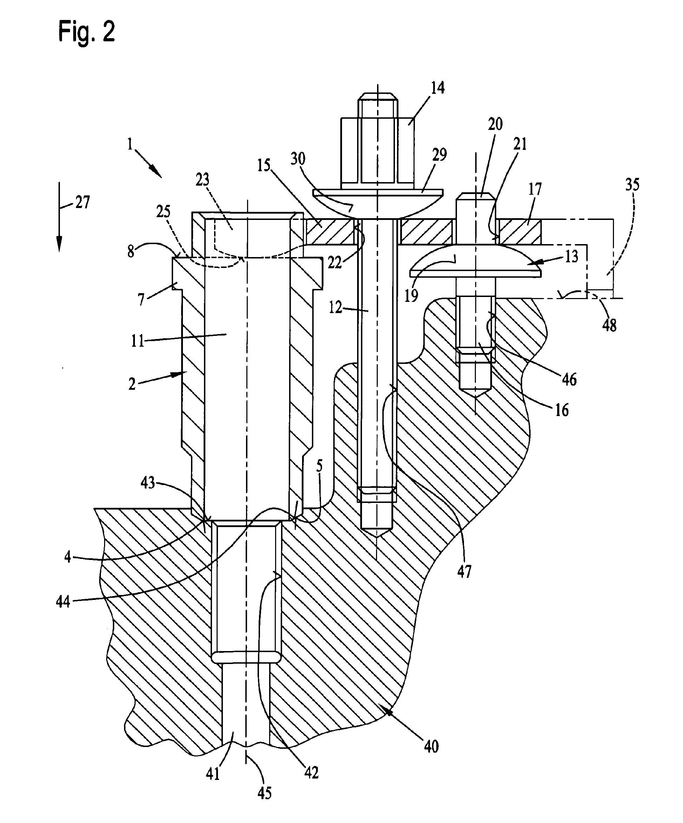

Fig. 2 zeigt beispielhaft die Vorrichtung 1 im Einsatz an einem Zylinderkopf 40. Dieser Zylinderkopf 40 ist im Vertikalschnitt in einem Teilbereich dargestellt und weist eine Bohrung 41 auf, in welche eine Glühkerze im normalen Betrieb des Zylinderkopfes 40 eingesetzt ist, wie dies beispielhaft in der DE 20 2005 008 241.4 U1 beschrieben ist. Insoweit wird auf diese Druckschrift verwiesen.

Bei der Darstellung in Fig. 2 ist diese Glühkerze entfernt, so dass das im oberen Endbereich der Bohrung 41 vorgesehene Innengewinde 42 zugänglich ist. Im oberen Endbereich der Bohrung 41 ist beim vorliegenden Ausführungsbeispiel ein Zentrieransatz in Form einer Einsenkung 43 vorgesehen, so dass im Umgebungsbereich der Bohrung 41 eine konzentrisch zur Bohrung 41 angeordnete Stützringfläche 44 gebildet wird. Dieser Ausgestaltung der Stützringfläche 44 ist die Zentrierbuchse 2 mit ihrer unteren Stirnringfläche 4 sowie ihrer Zentrierfläche 5 angepasst. Damit ist erreichbar, dass sich die Zentrierbuchse 2, sofern diese in Richtung des Pfeiles 27 gegen den Zylinderkopf 40 und damit gegen die Stützringfläche 44 gepresst wird, mit ihrer Durchgangsbohrung 11 bezüglich der Längsmittelachse 45 sowohl in koaxialer Richtung als auch in konzentrischer Ausrichtung zwangsläufig ausrichtet. Dabei wird durch den Spannhebel 15 diese korrekt ausgerichtete Position, wie diese beispielhaft in Fig. 2 dargestellt ist, fixiert.

Der Spannhebel 15 ist beim vorliegenden Ausführungsbeispiel mit seinen beiden Durchgangsbohrungen 21 und 22 der Position zweier Gewindebohrungen 46 und 47 des Zylinderkopfes angepasst, so dass die in Fig. 2 dargestellte Position erreichbar ist. Dabei ist aus Fig. 2 erkennbar, dass sich der Spannhebel 15 mit seinem hinteren Endbereich 17 im Umgebungsbereich der Durchgangsbohrung 21 auf der kalottenförmig ausgebildeten Oberfläche 19 des Stützringes 18 frei schwenkbar abstützt. In gleicher Art und Weise stützt sich der Spannhebel 15 im Bereich seiner Durchgangsbohrung 22 auf der kalottenförmig ausgebildeten Oberfläche 30 des Stützringes 29 der Spannmutter 14 in jeder Richtung schwenkbar ab. Damit wird erreicht, wie bereits oben erwähnt, dass sich der Spannhebel 15 der sich einstellenden korrekten Ausrichtung der Zentrierhülse 2 während des Spannvorganges anpassen kann. Des Weiteren ist aus Fig. 2 für den hinteren Gabelschenkel 23 erkennbar, dass sich dieser mit seiner gewölbten Spannfläche 25 auf der Stützfläche 8 des Stützsteges 7 der Zentrierbuchse 2 axial abstützt.

Es ist leicht vorstellbar, dass durch Anziehen der Spannmutter 14 (oder des Stützelementes 13) die Zentrierbuchse 2 präzise ausgerichtet mit ihrer Stirnringfläche 4 sowie ihrer Zentrierfläche 5 gegen die Stützringfläche 44 der Einsenkung 43 im Umgebungsbereich der Bohrung 41 des Zylinderkopfes 40 gepresst wird. Aufgrund der gabelförmigen Ausbildung des Spannhebels 15 bleibt hierbei die Durchgangsbohrung 11 der Zentrierbuchse 2 von außen frei zugänglich, so dass ein Bearbeitungswerkzeug drehbar und axial verschiebbar in die Durchgangsbohrung 11 einsetzbar ist. Somit kann über die Zentrierbuchse 2 mit ihrer Durchgangsbohrung 11 ein solches Werkzeug beispielsweise zur Nachbearbeitung des Innengewindes 42 sowie auch der restlichen Bohrung 41 präzise ausgerichtet eingesetzt werden.

Des Weiteren kann erfindungsgemäß auch vorgesehen sein, dass der Spannhebel 15 in seinem hinteren Endbereich 17 mit einem vertikal nach unten, zum Zylinderkopf 40 hin gerichteten Stützsteg 35 versehen ist, über welchem sich der Spannhebel 15 axial an der Oberfläche 48 des Zylinderkopfes abstützt. Dieser Stützsteg 35 ist in Fig. 2 in Phantomlinien beispielhaft dargestellt. Um eine Schwenkbarkeit des Spannhebels 15 insbesondere um dessen Längsachse 31 (Fig. 1) zu ermöglichen, kann die untere Begrenzungsfläche des Stützsteges 35 bogenförmig verlaufend ausgebildet sein. Eine solche Ausgestaltung des Spannhebels 15 kann erforderlich sein, sofern die Gewindebohrung 46 an einem Zylinderkopf nicht vorhanden ist und somit eine andere Art des Widerlagers erforderlich ist. Je nach Formgestaltung des Zylinderkopfes 40 kann auch vorgesehen sein, dass sich der Spannhebel 15 mit seinem hinteren Endbereich 17 direkt auf dem Zylinderkopf abstützt.

Auch kann vorgesehen sein, dass das Stützelement 13 ohne den aus Fig. 2 ersichtlichen Führungszapfen 20 ausgestattet ist und um 180° gedreht mit seinem Gewindezapfen 16 in den Spannhebel 15 eingeschraubt ist. Auch durch diese Anordnung ist eine schwenkbare axiale Abstützung des Spannhebels 15 in seinem hinteren Endbereich 17 auf der Oberfläche 48 des Zylinderkopfes 40 möglich, ohne dass die Gewindebohrung 46 vorhanden sein muss.

Weiter ist aus Fig. 2 ersichtlich, dass die Gewindestange 12 in die Gewindebohrung 47 und der Gewindezapfen 16 in die Gewindebohrung 46 des Zylinderkopfes 40 feststehend eingeschraubt sind. Die Form und Größe des Spannhebels 15 sowie die Anordnung der Durchgangsbohrung 21 und 22 im Spannhebel 15 sind den Abständen der zu bearbeitenden Bohrung 41 und der Gewindebohrungen 46 und 47 entsprechend angepasst.

Anstatt der Gewindestange 12 mit ihrer Spannmutter 14 kann auch eine Spannschraube vorgesehen sein, deren Schraubenkopf nach Art der Spannmutter 14 ausgebildet ist (in der Zeichnung nicht näher dargestellt). Die dargestellte Ausführungsvariante mit der Gewindestange 12 und der Spannmutter 14 hat jedoch den Vorteil, dass ein Einsatz auch bei unterschiedlicher Gewindetiefe der Gewindebohrung 47 möglich ist. Die Darstellung der Fig. 2 ist hier lediglich beispielhaft für eine fiktive Ausgestaltung der Oberfläche 48 eines Zylinderkopfes 40. Entsprechend der realen Formgebung eines Zylinderkopfes kann auch eine andere Ausgestaltung vorgesehen sein.

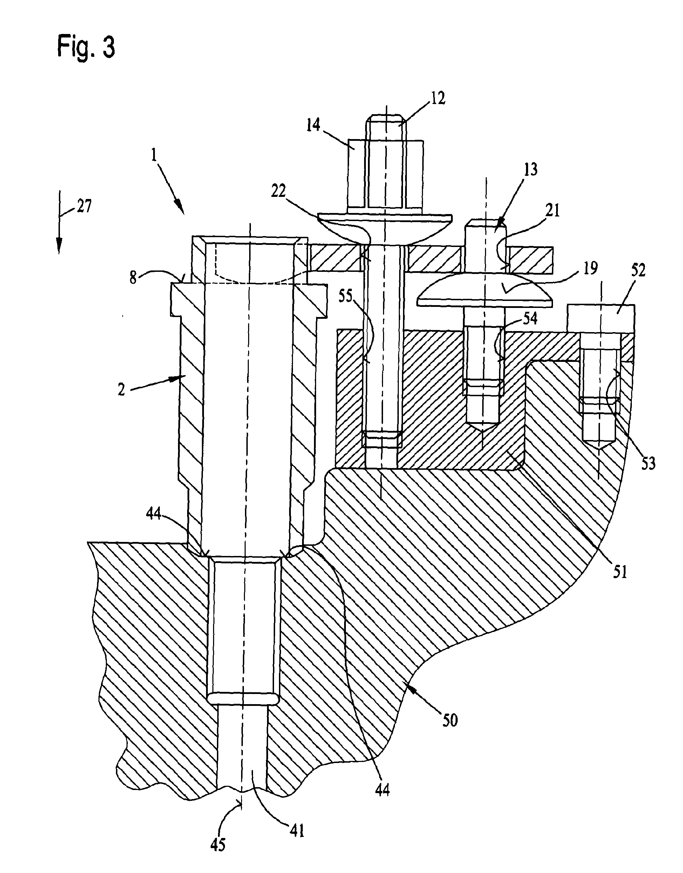

So zeigt Fig. 3 prinzipiell eine andere Ausführungsvariante eines Zylinderkopfes 50, dessen Oberfläche eine andere Formgebung aufweist. Um beispielsweise den auf die Formgebung des Zylinderkopfes 40 aus Fig. 2 angepassten Spannhebel 15 auch für eine solche Anwendung einsetzen zu können, ist bei diesem Ausführungsbeispiel ein Adapterelement 51 vorgesehen, dessen Formgebung an die Formgebung des Zylinderkopfes angepasst ist. Bei dieser Ausführungsform ist die Vorrichtung 1 ebenfalls in identischer Weise, wie bereits zu Fig. 2 dargestellt, einsetzbar. Allerdings wird hierbei der Spannhebel 15 nicht direkt mit dem Zylinderkopf 50 in Verbindung gebracht. Bei diesem Ausführungsbeispiel wird die Fixierung des Spannhebels 15 am Zylinderkopf 50 über das Adapterelement 51 erreicht. Dieses ist mittels einer Montageschraube 52 feststehend über eine Gewindebohrung 53 des Zylinderkopfes 50 am Zylinderkopf in einer vorbestimmten Ausrichtung und Lage festgelegt.

Zur Aufnahme der Gewindestange 12 sowie des Stützelementes 13 weist dieses Adapterelement 51 zwei entsprechend beabstandete Innengewinde 54 und 55 auf, in welche einerseits das Stützelement 13 und andererseits die Gewindestange 12 eingeschraubt ist. Es ist auch hier leicht vorstellbar, dass die an der Bohrung 41 des Zylinderkopfes 50 angesetzte Zentrierbuchse 2 gegen die Stützringfläche 44 der Einsenkung 43 im oberen Endbereich der Bohrung 41 pressbar ist und sich somit ebenfalls koaxial und konzentrisch auf die Längsmittelachse 45 der Bohrung 41 ausrichtet. Das Verspannen des Spannhebels 15 gegen die Stützfläche 8 wird hier ebenfalls durch die Spannmutter 14 bewirkt, wobei sich der Spannhebel 15 im Umgebungsbereich der Durchgangsbohrung 21 wiederum oberseitig auf der Oberfläche 19 des Stützelementes 13 abstützt.

Es wird deutlich, dass die Vorrichtung 1 mittels des Adapterelementes 51 auch bei einem andersartig ausgestalteten Zylinderkopf 50 einsetzbar ist.

Dabei kann ein solches Adapterelement 51 je nach Formgebung des Zylinderkopfes auch anders ausgestaltet sein. Vorteilhaft bei den dargestellten Ausführungsformen ist, dass insbesondere bei Verwendung des Adapters 51 bei dessen korrektem Ansatz am Zylinderkopf 50 die beiden Gewindebohrungen 54 und 55 möglichst parallel zur Längsmittelachse 45 der Bohrung 41 des Zylinderkopfes 50 verlaufen. Dadurch ist eine Einstellung des Spannhebels 15 relativ zur Zentrierbuchse 2 erreichbar, bei welcher der Spannhebel 15 im Wesentlichen rechtwinklig zur Zentrierbuchse 2 verläuft. Durch diesen rechtwinkligen Verlauf des Spannhebels 15, wie dieser beispielhaft in den Fig. 2 und 3 dargestellt ist, wird sichergestellt, dass die Krafteinleitung beim Spannen des Spannhebels 15 in die Zentrierbuchse 2 im Wesentlichen in Richtung des Pfeiles 27 erfolgt, so dass die Ausrichtung der Zentrierbuchse 2 auf diese Art und Weise am sichersten gewährleistet ist.

Dies bedeutet für die Ausgestaltung eines Adapterelementes 51 in Anpassung an die Formgebung eines Zylinderkopfes, dass auf diesen Umstand möglichst geachtet werden sollte.

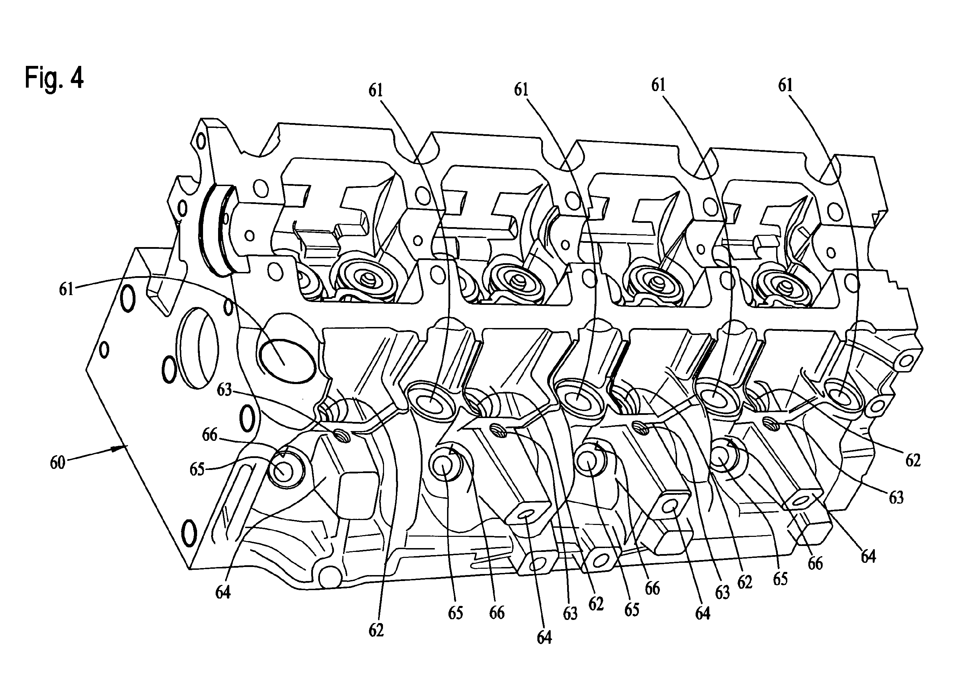

So ist in Fig. 4 ein Zylinderkopf 60 gezeigt, bei welchem ein Einsatz nach Fig. 2 oder ein Einsatz mit dem Adapterelement 51 nach Fig. 3 nicht möglich ist, da dessen Oberfläche völlig anders ausgestaltet ist und da dieser Zylinderkopf 60 nicht mit entsprechend angeordneten Gewindebohrungen versehen ist.

Wie aus Fig. 4 ersichtlich ist, weist der Zylinderkopf 60 mehrere Durchgangsbohrungen 61 auf, welche bei der dargestellten Ausführungsform für die feststehende Montage über diverse Montageschrauben an einem Motorblock vorgesehen sind. Des Weiteren sind im Zylinderkopf 60, in Fig. 4 nur teilweise erkennbar, wiederum Aufnahmebohrungen 62 vorgesehen, in welche Einspritzdüsen einsetzbar sind. Diesen Aufnahmebohrungen 62 benachbart weist dieser Zylinderkopf 60 jeweils eine Gewindebohrung 63 auf, welche im Einsatz zur Fixierung der eingesetzten Einspritzdüsen über eine sogenannte Spannpratze dienen, wie dies allgemein aus dem Stand der Technik bekannt ist.

Diese Gewindebohrungen 63 sind jeweils in einem sich nach außen erstreckenden Fortsatz 64 angeordnet. Neben diesen Fortsätzen 64 befindet sich wiederum Bohrungen 65, welche bei der dargestellten Ausführungsform des Zylinderkopfes 60 zur Aufnahme jeweils einer Glühkerze dienen. Dementsprechend weisen diese Bohrungen 65 auch entsprechende Innengewinde auf, welche allerdings in der Fig. 4 nicht näher dargestellt sind. Jede dieser Bohrungen 65 weist eine Einsenkung 66 auf, deren Ausgestaltung beispielsweise den Einsenkungen 43 der Bohrungen 41 der Zylinderköpfe 40 und 50 aus den vorangegangenen Ausführungsbeispielen entspricht.

Weiter ist aus Fig. 4 erkennbar, dass diese Bohrungen 65 nicht parallel zu den Gewindebohrungen 63 verlaufen. Dementsprechend sind auch die Einsenkungen nicht rechtwinklig zu den Gewindebohrungen 63 des Zylinderkopfes 60 ausgerichtet. D.h., dass die Vorrichtung 1 bei dieser Ausführungsform des Zylinderkopfes 60 nicht in der Art und Weise eingesetzt werden kann, wie dies zu den Fig. 2 und 3 dargestellt ist.

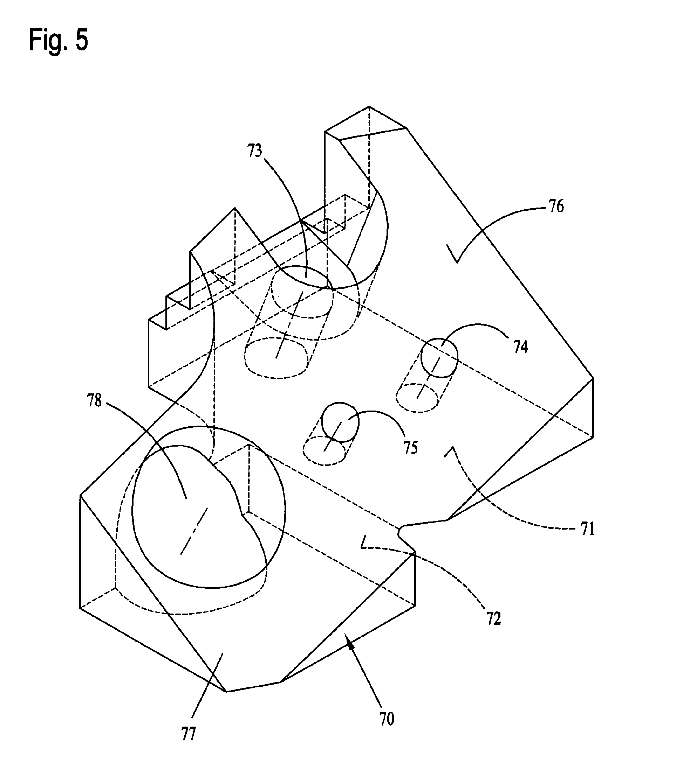

Um nun jedoch die Vorrichtung 1 auch für eine solche Ausgestaltung eines Zylinderkopfes einsetzen zu können, ist hier wiederum ein spezielles Adapterelement 70 vorgesehen, wie dies beispielhaft in Fig. 5 dargestellt ist. Dieses Adapterelement 70 ist der Formgebung des Zylinderkopfes im Bereich seiner Bohrung 66 sowie seiner Gewindebohrung 63 mit den Fortsätzen 64 angepasst. So bildet dieses Adapterelement 70 eine ebene, untere Auflagefläche 71, mit welchem das Adapterelement 70 oberseitig auf einem der Fortsätze 64 aufsetzbar ist. Zur seitlichen Positionierung wird die Auflagefläche 71 durch eine etwa rechtwinklig dazu verlaufende Anschlagfläche 72 begrenzt. Mit dieser Anschlagfläche 72 ist das Adapterelement 70 seitlich an der Seitenfläche einer der Fortsätze 64 ansetzbar. Damit ist das Adapterelement 70 in vertikaler und seitlicher Richtung an einen der Fortsätze 64 relativ positionsgenau ansetzbar.

Um nun die Position auch in Längsrichtung eines Fortsatzes 64 festlegen zu können und um das Adapterelement 70 feststehend mit dem Zylinderkopf 60 verbinden zu können, weist das Adapterelement in seinem rechten hinteren Bereich eine Durchgangsbohrung 73 auf, durch welche eine Montageschraube hindurch steckbar und in die Gewindebohrung 63 des Zylinderkopfes 60 einschraubbar ist. Da die Gewindebohrung 63 nicht rechtwinklig zur Oberfläche des jeweiligen Fortsatzes 64 verläuft, ist auch dementsprechend die Durchgangsbohrung 73 schräg geneigt verlaufend im Adapterelement 70 angeordnet.

Des Weiteren weist das Adapterelement 70 beim vorliegenden Ausführungsbeispiel zwei (vereinfacht dargestellte) Gewindebohrungen 74 und 75 auf, welche im Bereich einer schräg geneigten Oberfläche 76 des Adapterelementes 70 angeordnet sind. Dabei verlaufen die beiden Gewindebohrungen 74 und 75 rechtwinklig zu dieser geneigten Oberfläche 76 des Adapterelementes 70. Im am Zylinderkopf 60 angesetzten Zustand ist die Neigung der Oberfläche 76 derart gewählt, dass diese parallel zur Ringfläche der Einsenkung 66 der jeweils zugehörigen Bohrung 65 angeordnet ist. Durch den rechtwinkligen Verlauf der Gewindebohrungen 74 und 75 zur Oberfläche 76 wird erreicht, dass die beiden Gewindebohrungen 74 und 75 zumindest annähernd parallel zur Bohrung 65 des Zylinderkopfes 60 im angesetzten Zustand des Adapterelementes 70 verlaufen. Dabei dient die Gewindebohrung 74 zur Aufnahme des Stützelementes 13, während die Gewindebohrung 75 zur Aufnahme der Gewindestange 12 vorgesehen ist.

Des Weiteren bildet das Adapterelement 70 beim vorliegenden Ausführungsbeispiel einen Führungsabschnitt 77, welcher mit einer größer dimensionierten Durchgangsbohrung 78 versehen ist. Diese Durchgangsbohrung 78 dient zur losen Aufnahme der Zentrierbuchse 2 mit ihrem Führungszylinder 9 aus Fig. 1. Die Anordnung und Ausrichtung dieser Durchgangsbohrung 78 ist dabei so gewählt, dass diese achsparallel und im Wesentlichen konzentrisch zur Bohrung 65 des Zylinderkopfes ausgerichtet ist, sofern das Adapterelement 70 korrekt am Zylinderkopf 60 angesetzt und befestigt ist.

Dabei dient die Durchgangsbohrung 78 nicht zum endgültigen Ausrichten der Zentrierbuchse 2 gegenüber der Bohrung 65 des Zylinderkopfes, sondern verhindert lediglich, dass die Zentrierbuchse 2 beim Ansetzen in der Einsenkung 66 der Bohrung 65 aufgrund des schräg geneigten Verlaufs der Einsenkung 66 versehentlich herunterfällt. Damit ist die Zentrierbuchse 2 durch die Durchgangsbohrung 78 des Führungsabschnittes 77 gegen Herabfallen gesichert.

Das radiale Spiel zwischen der Zentrierbuchse 2 und der Durchgangsbohrung 78 kann jedoch vorzugsweise auch recht eng gewählt werden, so dass die Zentrierbuchse 2 beim Spannvorgang nur noch geringe Ausrichtbewegungen ausführt.

Das Adapterelement 70 ist bei dem dargestellten Ausführungsbeispiel an die Formgebung des Spannhebels 15 sowie die Dimensionierung der Zentrierbuchse 2 derart angepasst, dass der Spannhebel 15 zusammen mit der Gewindestange 12 und der zugehörigen Spannmutter 14 sowie dem Stützelement 13 in der Art und Weise einsetzbar ist, wie dies bei oben beschriebenen Ausführungsformen der Zylinderköpfe 40 und 50 gemäß der Zeichnungsfiguren 2 und 3 dargestellt ist.

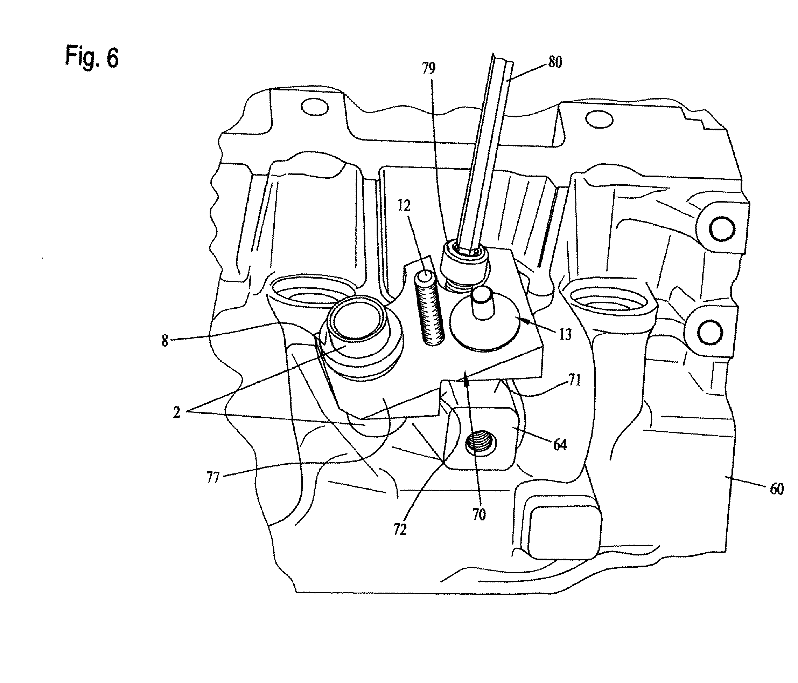

Den angesetzten Zustand des Adapterelementes 70 ist beispielhaft in Fig. 6 dargestellt. Es ist erkennbar, dass das Adapterelement 70 mit seiner Auflagefläche 71 oberseitig auf dem Fortsatz 64 des Zylinderkopfes 60 aufliegt. Mit seiner linken Anschlagfläche 72 liegt das Adapterelement 70 seitlich an diesem Fortsatz 64 an. Weiter ist in Fig. 6 noch die oben bereits erwähnte Montageschraube 79 erkennbar, welche beispielsweise als Innensechskantschraube ausgebildet sein kann und mittels eines zugehörigen Schlüsselwerkzeugs 80 in die Gewindebohrung 63 des Zylinderkopfes 60 (in Fig. 6 nicht erkennbar) einschraubbar ist. Nachdem die Montageschraube 79 in die Gewindebohrung 63 des Zylinderkopfes 60 eingeschraubt ist, ist somit das Adapterelement 70 in seiner Sollposition am Zylinderkopf 60 fixiert.

Weiter ist aus Fig. 6 erkennbar, dass das Stützelement 13 bereits am Adapterelement 70 montiert ist. Dabei ist dieses, wie bereits zu Fig. 5 beschrieben, in die in Fig. 6 nicht erkennbare Gewindebohrung 74 eingeschraubt. Die Gewindestange 12 wiederum ist in die aus Fig. 5 ersichtliche Gewindebohrung 75 eingeschraubt, während die Zentrierbuchse 2 durch die Durchgangsbohrung 78 des Führungsabschnittes 77 hindurch gesteckt ist und lose mit der Einsenkung 66 der Bohrung 65 (siehe Fig. 4) in Verbindung steht.

Es ist leicht vorstellbar, dass durch Aufsetzen des Spannhebels 15 einerseits auf die Gewindestange 12 und andererseits auf das Stützelement 13 der Spannhebel 15 mit seinen beiden Gabelschenkeln 23 und 24 mit der Stützfläche 8 der Zentrierbuchse 2 in Eingriff bringbar ist, wie dies bereits zu den vorangegangen Ausführungsbeispielen beschrieben wurde. Durch anschließendes Aufschrauben der Spannmutter 14 auf die Gewindestange 12 ist somit ein Verspannen der Zentrierbuchse 2 gegen den Zylinderkopf 60 über den Spannhebel 15 sicher durchführbar. Dabei wird auch hier die Zentrierbuchse 2, wie bereits zu den Fig. 2 und 3 beschrieben, beim Verspannen koaxial zu der zu bearbeitenden Bohrung 65 aus Fig. 4 des Zylinderkopfes 60 ausgerichtet.

Die Erfindung ist nicht auf die konkreten Formgebungen, insbesondere des Spannhebels 15 oder der dargestellten Adapterelemente 51 und 70 beschränkt. In Fig. 1 ist hierzu beispielhaft dargestellt, dass der Spannhebel 15 auch länger ausgebildet sein kann und beispielsweise eine abgewinkelte Verlängerung 85 aufweist, welche ebenfalls mit einer Durchgangsbohrung 86 versehen sein kann. Je nach Ausgestaltung eines Zylinderkopfes kann der Spannhebel 15 auch schräg abgewinkelt ausgebildet sein. Sollte im einen oder anderen Fall im Bereich der zu bearbeitenden Bohrung eines Zylinderkopfes nur ein Innengewinde zum Einschrauben der Gewindestange 12 vorhanden sein, welche nicht parallel zur zu bearbeitenden Bohrung des Zylinderkopfes verläuft, so kann der Spannhebel 15 auch abgewinkelt ausgebildet sein. Dabei kann der Abschnitt des Spannhebels 15 mit seinen beiden Gabelschenkeln 23 und 24 rechtwinklig zur Zentrierbuchse 2 verlaufen, während der abgewinkelte Abschnitt des Spannhebels 15 im Wesentlichen rechtwinklig zu der geneigt zur zu bearbeitenden Bohrung verlaufenden Gewindebohrung des Zylinderkopfes verlaufend angeordnet ist. Auch durch eine solche Ausgestaltung ist es sicher möglich, die Zentrierbuchse 2 axial gegen einen Zentrieransatz einer zu bearbeitenden Bohrung eines Zylinderkopfes zu spannen. Insoweit ist erkennbar, dass die dargestellten Ausführungsbeispiele und Ausführungsformen lediglich den Erfindungsgegenstand insbesondere in Bezug auf dessen Funktionsweise näher erläutern.

Zusammenfassend ist somit festzustellen, dass durch die erfindungsgemäße Ausgestaltung der Vorrichtung 1 mit ihrer Zentrierbuchse 2 und insbesondere ihrem Spannhebel 15 eine konzentrische und koaxiale Ausrichtung der Zentrierbuchse 2 durch Aufbringen von axialen Spannkräften durchführbar ist.

Dabei ist an dieser Stelle ebenfalls anzumerken, dass die Zentrierbuchse 2, wie diese in den Zeichnungsfiguren dargestellt ist, ebenfalls nur beispielhaft ist. So kann beispielsweise, je nach Ausgestaltung des Spannhebels 15 der Führungszylinder 6 der Zentrierbuchse 2 auch entfallen. Dabei sollte für eine einfachere Handhabung jedoch darauf geachtet werden, dass auf andere Art sichergestellt ist, dass der Spannhebel 15 beim Spannvorgang nicht von der Zentrierbuchse 2 abrutschen kann.

Auch kann das Zentrierelement 3 mit der beispielhaft dargestellten Stirnringfläche 4 bzw. der Zentrierfläche 5 anders ausgebildet sein. Dies ist im Wesentlichen von der Ausgestaltung des Umgebungsbereiches der zu bearbeitenden Bohrung des Zylinderkopfes abhängig. So könnte beispielsweise der Zentrieransatz einer solchen zu bearbeitenden Bohrung auch als umlaufender Ringdom ausgebildet sein, so dass der untere Endbereich der Durchgangsbohrung 11 der Zentrierbuchse 2 entsprechend auszubilden ist, um die Zentrierbuchse entsprechend passend auf einen solchen Ringdom aufsetzen zu können.

Wesentlich bei der Erfindung ist, dass die Zentrierbuchse 2 durch Aufbringen von axialen Spannkräften und das damit verbundene Verspannen dieser Zentrierbuchse 2 im Umgebungsbereich der zu bearbeitenden Bohrung, zwangsläufig und automatisch koaxial und konzentrisch zur zu bearbeitenden Bohrung eines Zylinderkopfes ausgerichtet wird.

## Patentansprüche

1. Vorrichtung (1) mit einer Zentrierbuchse (2), welche zum zentrierten Ausrichten von Werkzeugen für die Bearbeitung von Bohrungen (41, 65) an Zylinderköpfen (40, 50, 60) mit einer Durchgangsbohrung (11) versehen ist, über welche die Zentrierbuchse (2) koaxial zur zu bearbeitenden Bohrung (41, 65) ausrichtbar ist,
**dadurch gekennzeichnet,**
**dass** die Zentrierbuchse (2) ein Zentrierelement (3, 4, 5) aufweist, mit welchem die Zentrierbuchse (2) mit einem im Umgebungsbereich der zu bearbeitenden Bohrung (41, 65) angeordneten Zentrieransatz (43, 44, 66) in Eingriff bringbar ist und,
**dass** mit der Zentrierbuchse (2) in Wirkverbindung bringbare Spannmittel (12, 13, 14, 15) vorgesehen sind, durch welche die Zentrierbuchse (2) axial gegen den Zentrieransatz (43, 44, 66) der zu bearbeitenden Bohrung (41, 65) verspannbar ist.

2. Vorrichtung nach Anspruch 1, **dadurch gekennzeichnet, dass** die Zentrierbuchse (2) in ihrem dem Zentrierelement (4, 5) gegenüberliegenden Endbereich eine vorzugsweise ringförmige Stützfläche (8) aufweist, über welche die erforderlichen Spannkräfte in die Zentrierbuchse (2) einleitbar sind.

3. Vorrichtung nach Anspruch 1 oder 2, **dadurch gekennzeichnet, dass** zum Aufbringen der Spannkräfte ein Spannhebel (15) vorgesehen ist, welcher mittels einer Spanneinrichtung (12, 14) gegen die Zentrierbuchse pressbar ist.

4. Vorrichtung nach Anspruch 3, **dadurch gekennzeichnet, dass** der Spannhebel (15) ein gabelförmiges oder langlochartiges Ende mit zwei voneinander seitlich beabstandeten Gabelschenkeln (23, 24) aufweist, mit welchen der Spannhebel (15) auf der Spannfläche (8) der Zentrierbuchse in zwei sich diametral gegenüber liegenden Bereichen der Spannfläche (8) aufsetzbar ist.

5. Vorrichtung nach Anspruch 4, **dadurch gekennzeichnet, dass** die Zentrierbuchse (2) zur seitlichen Führung der auf der Spannfläche (8) aufgesetzten Gabelschenkel (23, 24) des Spannhebels (15) einen über die Spannfläche (8) axial überstehenden Führungszylinder (6) aufweist.

6. Vorrichtung nach einem der Ansprüche 3 bis 5, **dadurch gekennzeichnet, dass** der Spannhebel (15) durch eine Spanneinrichtung in Form einer Gewindestange (12) mit Spannmutter (14) oder in Form einer Spannschraube gegen den Zylinderkopf (40, 50, 60) und somit gegen die Zentrierbuchse (2) verpannbar ist.

7. Vorrichtung nach Anspruch 6, **dadurch gekennzeichnet, dass** die Gewindestange (12) oder die Spannschraube zum verspannen des Spannhebels (15) in eine Gewindebohrung (47) des Zylinderkopfes (40) einschraubbar ist und,
dass die Gewindestange (12) oder die Spannschraube eine Durchgangsbohrung (22) des Spannhebels (15) durchragt, welche in einem Abstand zur aufgenommenen Zentrierhülse (2) angeordnet ist, welcher dem Abstand der Gewindebohrung (47) von der zu bearbeitenden Bohrung (41) des Zylinderkopfes entspricht.

8. Vorrichtung nach Anspruch 6 oder 7, **dadurch gekennzeichnet, dass** im den Gabelschenkeln (24, 25) gegenüberliegenden Endbereich (17) des Spannhebels (15) ein Stützelement (13) vorgesehen ist und,
dass der Spannvorgang wahlweise durch die Spannmutter (14) bzw. die Spannschraube und/oder das Stützelement (13) bewirkbar ist.

9. Vorrichtung nach Anspruch 8, **dadurch gekennzeichnet, dass** die Spannmutter (14) und/oder das Stützelement (13) jeweils mit einer konvexen, kalottenförmig ausgebildeten Oberflächen (19, 30) ausgestattet sind, an welchen sich der Spannhebel (15) um seine Längsachse (31) und um seine Querachse (33) schwenkbar abstützt.

10. Vorrichtung nach Anspruch 8 oder 9, **dadurch gekennzeichnet, dass** das Stützelement (13) einen Gewindezapfen (16) aufweist, mit welchem das Stützelement axial feststehend oder verstellbar in eine Gewindebohrung (46) des Zylinderkopfes (40) einschraubbar ist.

11. Vorrichtung nach einem der Ansprüche 1 bis 6, **dadurch gekennzeichnet, dass** ein am Zylinderkopf (50, 60) feststehend ansetzbares Adapterelement (51, 70) vorgesehen ist, an welchem die Spannmittel (12, 13, 14, 15) in einer vorbestimmten Position relativ zur zu bearbeitenden Bohrung (41, 65) des Zylinderkopfes (50, 60) angeordnet sind.

12. Vorrichtung nach Anspruch 11, **dadurch gekennzeichnet, dass** das Adapterelement (51, 70) mit Gewindebohrungen (54, 55, 74, 75) versehen ist, über welche die Spannmittel (12, 13, 14, 15) am Adapterelement (51, 70) befestigbar sind.

13. Vorrichtung nach Anspruch 11 oder 12, **dadurch gekennzeichnet, dass** die Spannmittel nach einem der vorangegangenen Ansprüche 3 bis 10 ausgestaltet sind.

14. Vorrichtung nach einem der Ansprüche 11 bis 13, **dadurch gekennzeichnet, dass** das Adapterelement (70) einen Führungsabschnitt (77) mit einer Durchgangsbohrung (78) aufweist, dessen Durchgangsbohrung (78) in korrekt am Zylinderkopf (60) angesetztem Zustand des Adapterelementes (70) im Wesentlichen koaxial zur zu bearbeitenden Durchgangsbohrung (65) ausgerichtet ist.

15. Vorrichtung nach Anspruch 14, **dadurch gekennzeichnet, dass** die Zentrierbuchse (2) einen Führungszylinder (9) aufweist, mit welchem die Zentrierbuchse (2) in der Durchgangsbohrung (78) des Führungsabschnittes (77) lose einsetzbar und an der zu bearbeitenden Bohrung (65) des Zylinderkopfes (60) in einem vorausgerichteten Zustand ansetzbar ist.

16. Vorrichtung nach einem der Ansprüche 11 bis 15, **dadurch gekennzeichnet, dass** das Adapterelement (51, 70) in seiner Formgebung in Teilbereichen an die äußere Formgebung des Zylinderkopfes (50, 60) angepasst und über eine oder mehrere Montageschrauben (52, 79) in seiner am Zylinderkopf (50, 60) angesetzten, korrekten Position feststehend gesichert ist.
